# EUROPEAN PATENT APPLICATION

(11) **EP 0 551 589 A2**
(43) Date of publication of application: **21.07.1993**
(21) Application number: 92119605.1
(22) Date of filing: 17.11.1992
(51) Int. Cl.: F03C 1/00, F04B 49/00, F16H 61/40, F16H 61/42, F15B 1/02

(54) **Arrangement for a hydraulic machine**

(30) Priority: 18.11.1991 SE 9103419
(71) Applicant: HÄGGLUNDS DENISON DRIVES AB, S-890 42 Mellansel (SE)
(72) Inventor: Einar, Samuelson, S-891 41 Örnsköldsvik (SE)
(74) Representative: Boecker, Joachim, Dr.-Ing.

(57) **Abstract**

Arrangement for a hydraulic machine (3) and means (1) for ensuring a constant feed pressure at high and varying loads. According to the invention the high-pressure side (4) of the hydraulic machine is connected by means of a first check valve (2) to a first accumulator (1). A pressure reducing valve (5) is arranged in parallel with the check valve.

## Description

The invention relates to an arrangement for a hydraulic machine according to the precharacterising part of claim 1.

By a hydraulic machine is meant a hydraulic motor or a hydraulic pump, preferably a machine for operation under high and varying loads. In particular, the invention refers to arrangement for a hydraulic machine which is retained by means of hydraulic pressure or a hydraulic machine which for some other reason requires that the hydraulic pressure is kept within certain allowable limits.

A hydraulic machine suitable for operation under high and varying loads, for example crushing operation, is described in SE-A-456 517. It is a hydraulic piston motor with a cam disc with an internal cam curve and a cylinder block with a number of cylinders. In these cylinders there run pistons which press rollers against the cam curve such that a torque on the cylinder block arises. Either the housing of the hydraulic piston motor is fixed and the cylinder block rotatable, or the cylinder block is fixed and the motor housing rotatable.

Hydraulic machines of the kind described above require a certain feed pressure from a pressure medium source, that is, a certain lowest pressure such that, for example, the rollers are not allowed to separate from the cam curve. Such separation causes problems with leakage and guiding of the pistons. However, the main problem arises when bringing the parts back together. When, for example, a roller which is to follow the cam curve rolls over a cam peak, it may, because of inertial forces and/or too low feed pressure, leave the cam curve, jump over the cam bottom and then impact the next cam peak. This may cause hard jerks which may result in damage to the hydraulic machine.

In, for example, crushers driven by hydraulic motors, above all such crushers for crushing scrap vehicles, rock or other hard materials, the problems are pronounced since high pressures and very great and varying torques are involved.

When, for example, a large rock enters the crusher, a high peak load occurs. The hydraulic motor then operates against a great load torque, whereby it runs slower or even comes to a halt. However, one or more pressure medium pumps continue to pump pressure medium.

The pressure on the high-pressure side of the motor then rises, whereas the pump sucks pressure medium from the low-pressure side of the motor. The motor runs slower whereas the pressure medium, because of inertial forces, continues to flow at a practically undiminished rate, pressure medium thus being sucked away from the low-pressure side of the motor. If the feed pressure pump does not manage to deliver a sufficient quantity of pressure medium, the pressure on the low-pressure side of the motor will thus drop.

In those cases where the low pressure temporarily becomes lower than the feed pressure requirement of the motor, the rollers, for example, will separate from the cam curve. Then when the pressure returns to normal low pressure, the separated parts are brought together with great force with an ensuing risk of damage.

As already mentioned, the pressure medium pump continues to pump pressure medium to the high-pressure side of the motor such that the pressure rises. Pressure medium is compressed in the hydraulic pipe and the hydraulic pipe is extended, whereby a large energy quantity is stored therein.

When a sufficiently great pressure difference between the high-pressure side and the low-pressure side of the motor has been obtained, to crush the rock, the hydraulic motor starts again. Immediately after the rock has become crushed, the load torque is reduced. Since this torque is smaller than the corresponding pressure difference across the motor, the hydraulic motor, because of the stored energy, will have a high acceleration. The speed can then reach high values. As a result of a high speed, a deficiency of pressure medium on the high-pressure side, and hence a low pressure, will successively arise.

In those cases where the high pressure temporarily becomes lower than the feed pressure requirement of the motor, the rollers, for example, will separate from the cam curve. Then when the pressure returns to normal high pressure, the separated parts are brought back together with a very great force with an ensuing risk of heavy damage.

Thus, the problem is to maintain the feed pressure constant at high loads on a hydraulic machine to protect the hydraulic machine from breakdown.

It is known to maintain the feed pressure constant on the low-pressure side of a hydraulic machine, that is, the outlet side, for example by arranging an accumulator on the low-pressure side.

However, it is important to maintain the feed pressure higher than the feed pressure requirement of the hydraulic machine also on the high-pressure side of the hydraulic machine, since a higher pressure prevails on that side and hence greater forces are involved when parts are brought together after a temporary too low feed pressure. As already mentioned, the speed may reach high values which, in turn, may cause heavy damage in the event of loss of feed pressure. Equalizing the pressure here only by means of an accumulator, however, would rather aggravate the problems since this would entail the introduction of additional elasticity in the hydraulic system with an ensuing increased amount of stored energy. By "elasticity in the hydraulic system" is meant all resilience included in the system from the drive source all the way to the hydraulic motor, for example compression of pressure medium and expansion of pipes.

Another known method of protecting a hydraulic machine from breakdown is to attach the hydraulic machine in a resilient way, for example by attaching the torque arm of the hydraulic machine by means of a resilient shock absorber. In this way, a more even running is obtained and temporary pressure variations are avoided. However, this solution is probably unsuitable in applications of the kind mentioned here with very great forces in the torque arm which have to be taken care of. In addition, the solution provides an undesired resilience in the system and requires flexible hydraulic connections in the form of hoses.

The invention aims at developing an arrangement for a hydraulic machine of the above-mentioned kind which protects the hydraulic machine in a simple manner from breakdown due to temporarily lowered pressures without the need for a resilient attachment of the torque arm.

To achieve this aim the invention suggests an arrangement for a hydraulic machine according to the introductory part of claim 1, which is characterized by the features of the characterizing part of claim 1.

Further developments of the invention are characterized by the features of the additional claims.

The invention comprises connecting an accumulator to the high-pressure side of the hydraulic machine. The accumulator is connected to the hydraulic machine by means of a check valve and is charged by means of one or several pressure reducing valves.

One or more pressure medium pumps is or are adapted to pump pressure medium to the pressure reducing valve and hence to the accumulator, as well as to the hydraulic machine.

The accumulator should be arranged as close to the hydraulic machine as possible and with as low a throttle as possible to avoid considerable pressure drops. Thus, the accumulator should be connected in the immediate vicinity of the hydraulic machine or, at most, at a distance of a few metres from this machine.

The check valve is adapted such that pressure medium may freely flow from the accumulator to the hydraulic machine when the pressure in the latter drops.

The pressure reducing valve or valves is or are adapted for charging the accumulator without increasing the elasticity in the hydraulic system to an unnecessary extent.

The longer the charging of the accumulator is allowed to take, the fewer will be the problems (if any) caused by the charging of the accumulator. It is thus advantageous if the pressure reducing valve has a certain inherent flow resistance.

The longer pipes that are arranged between a pressure medium pump and a hydraulic machine, the higher speeds during the longer period of time arise after a standstill caused by a temporary pressure increase. This is due to the fact that in case of a long pipe, a considerable quantity of pressure medium is able to collect and be compressed while the hydraulic machine is at a standstill waiting for a sufficiently high pressure to build up in order to crush the object that has caused the standstill. The quantity of pressure medium and hence the stored energy will be smaller in a short pipe.

The problem with long pipes are particularly prominent in operations, such as crushing operations, where there are heavy forces involved.

The advantages of the invention are that it solves the initially described problems in a simple and inexpensive manner.

The solution means that large amounts of energy from a resilient attachment of the torque arm of the machine do not have to be taken care of. In addition, it is possible to use rigid tubes all the way up to the hydraulic machine. This is not possible, for example, in case of a resilient attachment of the torque arm, which requires more flexible hydraulic connections in the form of, for example, hoses.

By way of example, the invention will now be described in greater detail with reference to the accompanying drawings showing in
- Figure 1: an arrangement for a hydraulic machine according to the invention with an accumulator connected by means of a check valve to the high-pressure side of the hydraulic machine and a pressure reducing valve connected in parallel with the check valve,
- Figure 2: an arrangement for a hydraulic machine according to the invention with an accumulator directly connected to the low-pressure side of the hydraulic machine and an accumulator connected by means of a check valve to the high-pressure side of the hydraulic machine and a pressure reducing valve connected in parallel with the check valve,
- Figure 3: an arrangement for a hydraulic machine according to the invention with accumulators connected by means of check valves to both the low-pressure side and the high-pressure side of the hydraulic machine and with pressure reducing valves connected in parallel with the check valves,
- Figure 4: an arrangement for a hydraulic machine according to the invention with accumulators connected by means of check valves to both the low-pressure side and the high-pressure side of the hydraulic machine, where the accumulators are charged via an external pressure medium pump.

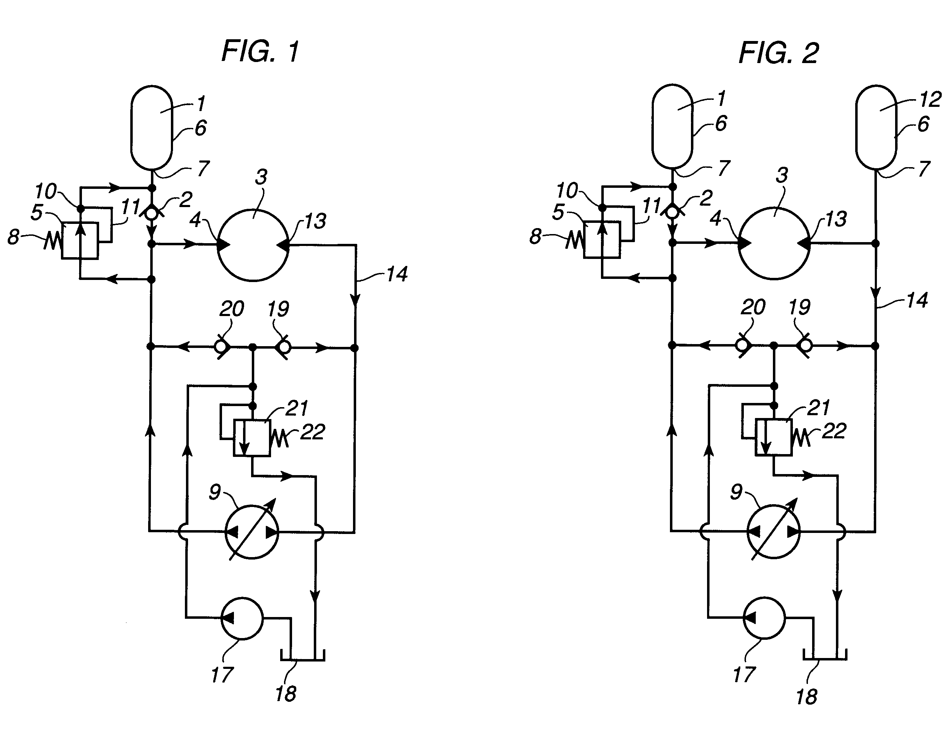

Figure 1 shows how, in order to ensure constant feed pressure at high and varying loads, an accumulator 1 is connected by means of a check valve 2 to the high-pressure side 4 of a hydraulic motor 3 and how a pressure reducing valve 5 is connected in parallel with the check valve 2.

The accumulator 1 may, for example, be of the type comprising a pressure vessel 6 which is connected to a hydraulic system via an opening 7 common to the inlet and the outlet of the accumulator. The accumulator 1 contains some form of resilient element, for example a gas. When liquid is supplied to the accumulator 1, the resilient element is compressed while the liquid pressure rises. When the system pressure drops, the accumulator 1 will then deliver liquid to the hydraulic system whereby the resilient element is allowed to relax.

The check valve 2 is adapted such that pressure medium may freely flow from the accumulator 1 to the hydraulic machine 3 when the pressure in the latter drops.

The pressure reducing valve 5 may, for example, be of the type which is spring-loaded (symbolically shown by the spring 8) and which in pressureless state is open.

When charging the accumulator 1, pressure medium is pumped by means of an internal pressure medium pump 9 via the pressure reducing valve 5 into the accumulator 1 until the desired pressure is attained. A pressure sensing member 10 is arranged between the pressure reducing valve 5 and the accumulator 1, and the sensed pressure is supplied via a pipe 11 to the pressure reducing valve 5 in such a way that when the desired pressure is attained, the spring load 8 is overcome and the pressure reducing valve 5 is closed.

Immediately after the check valve 2 has been open for the supply of pressure medium to the hydraulic machine 3 and the pressure has been reduced in the accumulator 1, the pressure reducing valve 5 is opened for restoring the pressure in the accumulator 1.

Figure 2 shows how, in order to further ensure constant feed pressure at high and varying loads, an additional accumulator 12 is at the same time directly connected to the low-pressure side 13 of the hydraulic machine 3.

The accumulator 12 at the low-pressure side 13 of the hydraulic machine is charged by pressure medium in the return pipe 14 of the hydraulic system when the pressure in the accumulator 12 is lower than the pressure in the return pipe 14 of the hydraulic system.

When the pressure in the hydraulic system is lower than the pressure in the accumulator 12, the system is supplied with pressure medium therefrom.

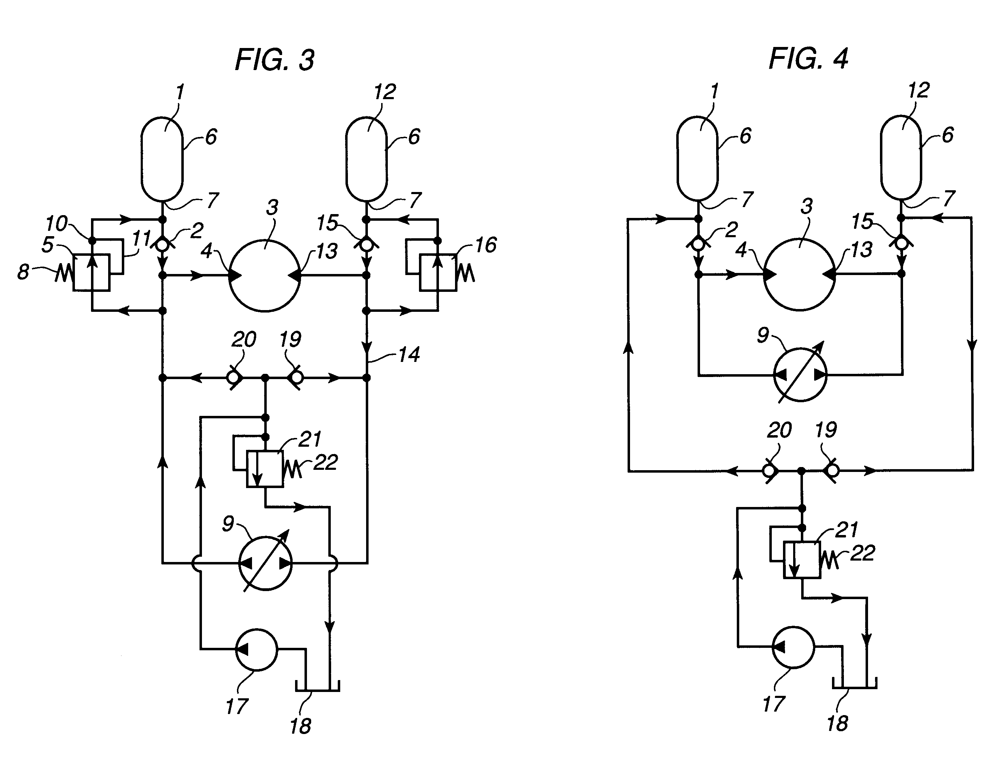

Figure 3 shows how, in order still further to ensure constant feed pressure at high and varying loads, accumulators 1, 12 are connected by means of check valves 2, 15 to both the high-pressure side 4 and the low-pressure side 13 of the hydraulic machine 3 and how pressure reducing valves 5, 16 are connected in parallel with the check valves 2, 15.

The accumulator 12 of the low-pressure side 13 is charged via the pressure reducing valve 16 of the low-pressure side 13 in a manner corresponding to that in which the accumulator 1 of the high-pressure side 4 is charged.

The arrangement according to Figure 3 means that the advantages of the invention are obtained in operation of a hydraulic machine 3 in both the forward and the reverse direction.

The advantage of arranging a pressure reducing valve 16 also on the low-pressure side 13 is that the outflow from the motor, which after a standstill may be very great, cannot pass without resistance directly into the accumulator 12. Flow resistances in the return pipe 14 and in the pressure reducing valve 16 brake the flow and prevent the motor 3 from racing up to a high speed and be damaged.

From the point of view of energy, in operations with high feed pressures it is most advantageous to arrange the hydraulic motor 3 in a closed-loop system and Figures 1-3 show such systems. Alternatively, the motor 3 can be arranged in an open-loop hydraulic system.

From Figures 1-3 it is clear how pressure medium by means of an external pressure medium pump 17 is passed into a closed-loop system from a pressure medium tank 18 via two check valves 19, 20. The check valves 19, 20 are adapted to be opened and admit pressure medium into system when necessary. A pressure limiting valve 21 is adapted to sense the pressure in the system and to be opened to let out pressure medium when necessary. In this way a suitable feed pressure is to be obtained. The pressure limiting valve 21 may be of the type which is spring-loaded (symbolically shown by a spring 22) and which in a pressureless state is closed. When the pressure rises above a certain level, the spring force is overcome and the valve 21 is opened so that pressure medium is released. The released pressure medium is returned to the pressure medium tank 18.

Figure 4 illustrates an alternative way of charging the accumulators 1, 12. This alternative way means that the accumulators 1, 12 are charged via the external pressure medium pump 17. The pressure reducing valve 21 in this case fulfills the same function as the pressure medium valves 5 and 16.

In the foregoing, an arrangement for a hydraulic machine has been described comprising a hydraulic motor 3, that is, a hydraulic machine which mainly provides mechanical energy but which, of course, during certain intervals is able to operate with the opposite energy direction, that is, as a pump.

However, the invention can, of course, be used and afford the same advantages in connection with a hydraulic machine which operates completely or for the main part as a pump.

## Claims

1. Arrangement for a hydraulic machine (3) and means (1) for ensuring a constant feed pressure at high and varying loads, **characterized** in that the high-pressure side (4) of the hydraulic machine is connected by means of a first check valve (2) to a first accumulator (1).

2. Arrangement for a hydraulic machine according to claim 1, **characterized** in that a first pressure reducing valve (5) is arranged for charging the accumulator with pressure medium from an internal pressure medium pump (9).

3. Arrangement for a hydraulic machine according to claim 1 or 2, **characterized** in that the low-pressure side (13) of the hydraulic machine is connected to a second accumulator (12).

4. Arrangement for a hydraulic machine according to claim 3, **characterized** in that the low-pressure side (13) of the hydraulic machine is connected via a second check valve (15) to the second accumulator (12) and that a second pressure reducing valve (16) is adapted to charge the second accumulator with pressure medium from an internal pressure medium pump (9).

5. Arrangement for a hydraulic machine according to any of claims 1-4, **characterized** in that the accumulator(s) (1, 12) included in the hydraulic equipment is/are arranged in close proximity to the hydraulic machine (3).

6. Arrangement for a hydraulic machine according to any of the preceding claims, **characterized** in that at least one of said pressure reducing valves (5, 16) is connected in parallel with the respective check valve (2, 15).

7. Arrangement for a hydraulic machine according to any of claims 1 or 3, **characterized** in that an external pressure medium pump (17) is adapted, via a pressure reducing valve (21), to charge the first accumulator with pressure medium.
